Europäisches Patentamt

European Patent Office

Office européen des brevets

(19)

(11) Veröffentlichungsnummer: **0 158 051**
**B1**

# (12) EUROPÄISCHE PATENTSCHRIFT

(45) Veröffentlichungstag der Patentschrift:
27.04.88

(21) Anmeldenummer: 85101746.7

(22) Anmeldetag: 16.02.85

(51) Int. Cl.⁴: **F 16 C 13/04,** F 16 C 32/06,
F 16 C 17/24, B 02 C 17/18,
D 06 F 37/00

(54) Behandlungsmaschine mit rotierbarer Behandlungstrommel.

(30) Priorität: 01.03.84 CH 997/84

(43) Veröffentlichungstag der Anmeldung:
16.10.85 Patentblatt 85/42

(45) Bekanntmachung des Hinweises auf die Patenterteilung:
27.04.88 Patentblatt 88/17

(84) Benannte Vertragsstaaten:
AT DE FR GB IT NL SE

(56) Entgegenhaltungen:
DE-A-1 801 446
DE-A-2 557 875
DE-A-2 908 513
DE-A-3 001 487
DE-C-2 049 402
DE-C-2 432 467
FR-A-2 169 039
FR-A-2 260 710
US-A-3 283 547
US-A-3 308 657

(73) Patentinhaber: SULZER- ESCHER WYSS AG,
Hardstrasse 319, CH- 8023 Zürich (CH)

(72) Erfinder: Christ, Alfred, Dr., Merkurstrasse 30, CH-
8032 Zürich (CH)
Erfinder: Lehmann, Helmuth, Friedhofstrasse 33,
CH- 8048 Zürich (CH)
Erfinder: Spiewok, Leonhard, Zielackerstrasse 19,
CH- 8304 Wallisellen (CH)

(74) Vertreter: Kubr, Václav, Dr., c/o Sulzer - Escher
Wyss AG Patentabteilung Postfach, CH- 8023
Zürich (CH)

EP 0 158 051 B1

LIBER, STOCKHOLM 1988

## Beschreibung

Die Erfindung bezieht sich auf eine Behandlungsmaschine der in Anspruch 1 angegebenen Gattung.

Maschinen dieser Art werden in verschiedenen technologischen Prozessen zur Behandlung verschiedener Schüttgüter mit verschiedenen Mitteln und Methoden verwendet. Mit Schüttgut wird hier allgemeines, zu behandelndes schüttfähiges Material bezeichnet, welches während der Behandlung unterschiedlich trocken bis nass, kühl bis heiss, und regelmässig bis unregelmässig am Umfang der Behandlungstrommel verteilt sein bzw. werden kann.

Eine solche Behandlungsmaschine stellt z. B. eine Waschzentrifuge für ein schüttfähiges chemisches Produkt dar, oder z. B. eine Maschine zum Reinigen oder zu anderer Behandlung von Textilien oder Kleidungsstücken. Das Waschen bzw. Befeuchten des zu behandelnden Materials kann abwechselnd mit kalten bis heissen Mitteln vorgenommen werden. Als zu behandelnde Chargen können auch Massen bis einige hundert Kilogramm vorkommen.

Unter den erwähnten technologischen Bedingungen wird die Behandlungstrommel mechanisch und/oder thermisch verschiedenartig beansprucht. Dabei zeigt sich beim Betrieb als erstes, bei unregelmässiger Verteilung des Gutes, eine Unwucht verschiedener Grösse, und als zweites eine Durchmesserveränderung der Behandlungstrommel wegen thermisch oder mechanisch bedingter Dehnung oder Schrumpfung des Trommelmaterials. Insbesondere, wenn das Spektrum der vorkommenden Behandlungsbedingungen breit ist, wenn eine grosse zu behandelnde Masse des Schüttgutes beim Rotieren vom Stillstand bis zu hohen Geschwindigkeiten zu behandeln ist, sind die bisherigen gattungsgleichen Maschinen beim Betrieb störungsanfällig und/oder nicht zuverlässig bis nicht mehr einsatzfähig.

Es ist bisher noch nicht gelungen, die Lagerung und die Antriebsweise der Behandlungstrommel bei der Maschine den Betriebsbedingungen entsprechend zufriedenstellend zu lösen, und so sind diese Maschinen meistens nur in einem beschränkten Anwendungsbereich verwendbar.

Eine wegfähige hydrostatische Lagerung ist z. B. aus der DE-C-20 49 402, und aus der DE-A-30 01 487 sowie der DE-A-24 32 467 bekannt. Die Stützelemente der bekannten Lagerungen entsprechen nicht den o.a. Bedürfnissen, insbesondere der Aufnahme der vorkommenden Belastungskräften in allen radialen Richtungen, wobei auch die Aufnahmefähigkeit nicht ganz einfach einstellbar ist. Die bekannten Vorrichtungen zum Messen der Unwucht, wie sie z. B. in der FR-A-2 169 039 oder US-A-3 283 547 beschrieben sind, erweisen sich nach diesseitigem Erachten vereinfachungsfähig.

Aus diesen Betrachtungen ergibt sich den Erfindern die Aufgabe, das System der Lagerung und die Konstruktion dessen einzelnen Stützelemente, wie auch das Messen der Unwuchtkräfte so zu verbessern, dass eine kostengünstige, betriebssichere Behandlungsmaschine der anfangs beschriebenen Art entsteht, die insbesondere in einem breiten Bereich der besagten technologischen Bedingungen universell verwendbar ist, und durch übersichtliche und einfachere Regulierungselemente bedienbar ist. Diese Aufgabe ist erfindungsgemäss mit den im kennzeichnenden Teil des Anspruchs 1 angegebenen Massnahmen erfüllt.

Die erfindungsgemäss vorgeschlagene Lagerung ist imstande, einerseits die sich beim Betrieb ändernden, mechanisch, thermisch und ausdehnungsmässig bedingten Belastungskräfte vollumfänglich und die dynamisch unwuchtsmässig bedingten weitgehend ohne unzulässige Weitergabe auf die übrige Masse der Maschine und ohne Beschädigung aufzunehmen und dabei die Behandlungstrommel bis zu einem dynamischen Grenzzustand des Systems zuverlässig zu lagern, und andererseits gestattet die erfindungsgemäss vorgeschlagene Lagerung das Messen der auf die Behandlungstrommel bzw. auf das Gehäuse beim Betrieb einwirkenden Belastungskräfte und das Regulieren des Antriebs aufgrund des Mess-Signals, so dass es möglich ist, einen dynamischen, nicht mehr beherrschbaren Grenzzustand vorbeugend zu vermeiden.

In den dem Anspruch 1 sich anschliessenden Ansprüchen 2 - 14 sind vorteilhafte Massnahmen zur Ausführung einer erfindungsgemässen Behandlungsmaschine angegeben.

Im weiteren wird der Erfindungsgegenstand und seine Vorteile anhand einiger in der Zeichnung dargestellten Ausführungsbeispiele näher beschrieben und erklärt.

In der Zeichnung zeigen:

Figur 1 eine Bauart der Behandlungsmaschine, schematisch, partiell im axialen Längsschnitt,

Figur 2 eine zweite Bauart,

Figur 3 eine Ausführung eines hydrostatischen Stützelementes im axialen Längsschnitt, und

Figur 4 schematisch eine Anordnung eines Speisesystems für die hydrostatischen Stützelemente und eines Antriebssystems an einer Behandlungsmaschine.

Die Behandlungsmaschine weist in einem Gehäuse 1 eine Behandlungstrommel 2 auf. Diese ist im Gehäuse rotierbar gelagert. Zum Drehen der Behandlungstrommel 2 um ihre Längsachse ist ein Antrieb mit einem Drehmoment-und Drehzahl-regulierbaren Motor 3 und z. B. einem Zahnriemen 4 vorgesehen.

Die Maschine ist für eine chargenweise Behandlung eines Schüttgutes bestimmt. Beim Stillstand der Behandlungstrommel wird das zu behandelnde Gut im kalten Zustand nach Öffnen eines Eintrittsdeckels 5 hineingeladen. Nach Schliessen des Deckels 5 wird über nicht gezeichnete Leitungen bei langsamem Drehen der Behandlungstrommel das Gut mit einer heissen oder kalten Flüssigkeit getränkt, in einer folgenden Phase wird bei schnellerem Drehen die Flüssigkeit durch nicht gezeichnete Perforierung in der Trommelwandung aus dem Gut wegzentrifugiert, dann mit einer kalten oder heissen Flüssigkeit beim Drehen gespült. Das gegebenenfalls mehrfach in dieser Weise behandelte Gut wird nach Öffnen eines Austrittsdeckels 6 herausbefördert. Das Be- und Entladen der Behandlungstrommel, wie auch der Transport des Gutes hindurch, werden durch Kippen der Maschine um einen Angelpunkt 7 mittels einer Hebevorrichtung 8 erleichtert. Bei der Behandlung können durch die unterschiedlichen Behandlungstemperaturen Durchmesseränderungen der Trommel eventuell bis etwa ± 2 mm vorkommen, wobei die Umfangsgeschwindigkeiten der Trommel 2 50 m/sec übersteigen können.

Die Behandlungstrommel 2 ist in dem Gehäuse 1 mittels mindestens zwei Lagerkränzen gelagert, welche wegfähige, hydrostatische Stützelemente 9 aufweisen. Diese Lagerkränze sind bezüglich der Behandlungstrommel 2 in axialer Richtung voneinander im Abstand angeordnet.

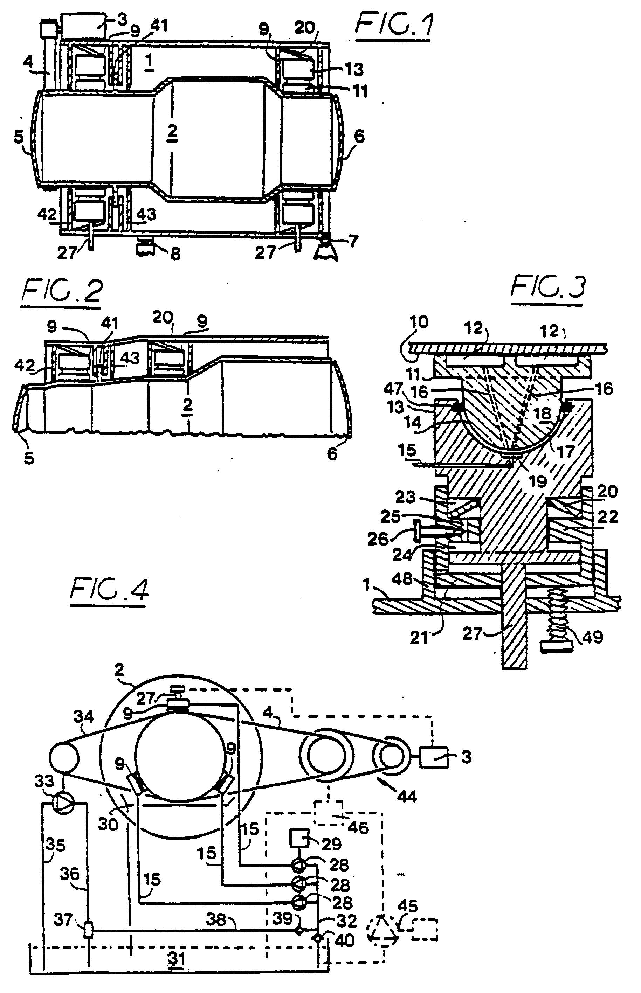

Wie in Figur 1 gezeigt, sind die Lagerkränze an den beiden Endbereichen der Behandlungstrommel 2 angeordnet.

In der Bauart nach Figur 2 ist die Trommel 2 im Gehäuse fliegend gelagert, wobei die Lagerkränze an einer Seite der Trommel (links im Bild) vorgesehen sind.

Jeder Lagerkranz weist mindestens drei hydrostatische Stützelemente 9 auf, die regelmässig an der Aussenwand der Trommel im Kreis verteilt und zwischen einer am Umfang der Trommel 2 ausgebildeten und entsprechend bearbeiteten kreiszylindrischen Lauffläche 10 und dem Gehäuse 1 angeordnet sind.

Die Stützelemente sind wegfähig, das heisst, sie können sich einer sich ändernden Distanz von der Lauffläche 10 zu dem Gehäuse 1 in radialer Richtung anpassen, indem sie mindestens zwei zueinander in radialer Richtung der Lagerung bis zu einer Endlage verschiebbare Teile 11 und 13 aufweisen und über ein einstellbar elastisches Zwischenglied 20 am Gehäuse abgestützt sind. Jedes der hydrostatischen Stützelemente 9 in einem Lagerkranz wird volumetrisch mit einer im wesentlichen gleichen Strommenge eines Druckfluids zur Wahrung seiner hydrostatischen Arbeitsweise gespeist, wie besonders in Figur 4 gezeigt ist.

An der Maschine ist eine Vorrichtung vorgesehen zum Messen der dynamischen Belastung des Gehäuses durch eine Unwucht der Behandlungstrommel 2, von welcher ein Signal zum Regulieren des Antriebes der Behandlungstrommel 2 abgeleitet ist.

Die Art und Weise des Messens und des Regulierens wird später beschrieben.

Mit der dargestellten Vorrichtung wird die dynamische Belastung des Gehäuses 1 durch die Unwucht als Folge einer unregelmässigen Verteilung des Gutes in der Behandlungstrommel 2 beim Rotieren gemessen. Dazu ist ein Weganzeiger 27 vorgesehen zum Auslösen eines Signals zum Reduzieren der Drehgeschwindigkeit der Trommel, wenn das dynamische System der Behandlungsmaschine eine höchstzulässige Belastungsgrenze erreicht.

Das hydrostatische, die Behandlungstrommel 2 radial lagernde Stützelement 9 hat einen Tragteller 11 mit der Lauffläche 10 zugewandten, mindestens drei Drucktaschen 12. Der Tragteller ist in einem am Gehäuse 1 abgestützten Stützkörper 13, in Richtung der aufzunehmenden Belastung verschiebbar bis zu einer Endlage eingebettet. Zwischen diesen zwei Teilen 11 und 13 ist ein mit einer elastischen Dichtung 47 abgedichteter Druckraum 14 vorgesehen, der mit einem Druckfluid über eine Leitung 15 zu speisen ist. Das Druckfluid füllt den abgedichteten Druckraum 14 bei Aufbau eines Druckes, stützt und trägt den Tragteller 11 in Richtung der aufzunehmenden Kraft und fliesst durch Drosselbohrungen 16 im Tragteller in die Drucktaschen 12 zum Aufbau eines hydrostatischen Druckes zwischen dem Tragteller 11 und der Lauffläche 10. Das Druckfluid bildet einen eine trockene Reibung zwischen den Teilen verhindernden Fluidfilm und fliesst durch den Spalt zwischen dem Tragteller 11 und der Lauffläche 10 in die Umgebung weg.

Nach diesem bekannten Prinzip bewegt sich der Tragteller 11 ständig in Richtung der aufzunehmenden Kraft und unter ihrer Einwirkung zwischen der Lauffläche 10 und dem Stützkörper 13 entsprechend dem jeweiligen Druckunterschied zwischen den Drucktaschen 12 und dem Druckraum 14.

Um auch den allenfalls auftretenden, taumelnden Bewegungen der Behandlungstrommel 2 folgen zu können, ist der Druckraum 14 zwischen einer konkaven Fläche 17 im Stützkörper 13 und einer zu dieser komplementär ausgebildeten konvexen Fläche 18 ausgebildet. Dies sind die Halbkugelflächen 17 und 18. Da der halbsphärische Druckraum 14 ständig unter dem Druck des zugespeisten Druckfluids steht - ein Kanalnetzsystem 19 sorgt dafür -, wird eine minimale Flächenpressung auf die sphärischen Flächen erreicht. Das Stützelement ist so ausgelegt, dass ca. 90 % der aufzunehmenden Kraft beim Betrieb bis zu der dynamischen Belastungsgrenze hydrostatisch aufgenommen werden, und nur ca. 10 % durch direkte Berührung der sphärischen Flächen. Dabei sind die Berührungsreibkräfte vernachlässigbar klein, und der Tragteller 11 kann sich praktisch frei nach der Lage der Lauffläche 10 ausrichten. Der Stützkörper 13 ist mittels eines, in radialer Richtung der aufzunehmenden Belastung wegfähigen, einstellbar elastischen Zwischengliedes, hier einer Tellerfeder 20 am Gehäuse abgestützt. Die Einstellung ist mittels einer Stellschraube 49 möglich. Es ist auch eine andere Abstützung vorstellbar, z. B. ein gummielatischer Block, ein Fluidkissen, oder ein Tellerfederpaket mit einer dämpfenden Charakteristik.

Zum Dämpfen der Elastizität der Feder 20, bzw. der Bewegungen des Stützkörpers 13 gegen die Feder 20 und das Gehäuse 1 ist in dem gezeigten Beispiel parallel zum Zwischenglied, zur Feder 20, eine Dämpfungsvorrichtung vorgesehen: Der Stützkörper 13 ist in einer am Gehäuse 1 befestigten Hülse 21 kolbenartig eingebettet und ist komplementär mit der Hülse 21 zum Begrenzen zweier voneinander mittels einer Trennwand 22 getrennten, mit einem Fluid gefüllten Räumen 23 und 24 ausgebildet. In dem Raum 23 ist die Tellerfeder 20 untergebracht. Durch die Trennwand 22 führt ein Verbindungskanal 25, dessen Profil mittels einer Drosselschraube 26 veränderbar ist. Bei der relativen Bewegung des Stützkörpers 13 zur Hülse 21, bzw. zum Gehäuse 1 fliesst das Fluid von einem der Räume 23 bzw. 24 gedrosselt in den anderen, was die Bewegung dämpft. Mittels der Drosselschraube 26 lässt sich die Dämpfungswirkung der Vorrichtung einstellen.

Die statische Kraft-Weg-Kennlinie dieser beschriebenen Stützelement-Anordnung ist wie folgt: Konstante Stützkraft bis zum Punkt, wo die sphärischen Flächen 17 und 18 zueinander zum Aufliegen kommen; dann entsprechend der Federkennlinie der Feder 20 ansteigende Stützkraft. Die dynamische Kraft-Weg-Kennlinie im Falle von Auslenkungen der Trommel 2 unter Unwucht umfasst sowohl im Konstantkraftteil als auch in dem ansteigenden Teil eine Dämpfungsschleife, deren Ausmass im Konstantkraftteil durch die Auslenkungsgeschwindigkeit der Trommel 2 unter Unwucht gegeben ist, und im ansteigenden Teil der Stützkraft mittels der Drosselschraube eingestellt werden kann.

Mit den beschriebenen zwei Lagerkränzen mit den hydrostatischen Stützelementen ist eine federnde und einstellbar gedämpfte, die Behandlungstrommel 2 verlässlich zentrierende Lagerung gegeben.

Das Messen der dynamischen Belastung des Gehäuses 1 durch die Unwuchtbelastung der Behandlungstrommel 2, das zum Regulieren des Antriebs der Trommel 2 benutzt wird, besteht im Messen des Druckes, mit welchem der Stützkörper 13 eines Stützelementes 9 auf das Gehäuse einwirkt. Dazu wird hier der Abstand, der zwischen dem Stützkörper 13 und dem Gehäuse 1 beim Druck des Stützkörpers gegen die Feder 20 vorliegt, gemessen, der also das Ausmass der Auslenkung der unter Wirkung der Unwucht ausschlagenden Behandlungstrommel 2 angibt. Dazu ist an der dem Gehäuse zugewandten Seite des Stützkörpers 13 ein Weganzeiger 27 angebracht, der durch eine anliegende Wand des Gehäuses 1 führt. Seine Auslenkung gibt das Ausmass der dynamischen Belastung des Systems durch die Unwucht und signalisiert zum Regulieren des Antriebes, ob bei vorliegender Drehgeschwindigkeit der Trommel 2 eine Grenze der dynamischen Belastbarkeit des Systems erreicht worden ist oder nicht. Demnach wird die Drehgeschwindigkeit aufrechterhalten, reduziert oder erhöht.

Zur axialen Lagerung der Behandlungstrommel 2 ist ein hydrodynamisches Lager 41 vorgesehen. Als Fluid für dieses Lager wird das aus den hydrostatischen Stützelementen 9 wegfliessende Fluid benutzt. Dazu ist mit Kreiswänden 42 und 43 ein gegen die Umgebung abgeschlossenes, die Stützelemente 8 umschliessendes Lagergehäuse gebildet, in dem das hydrodynamische Axiallager 41 untergebracht ist, und sich so im Sumpf des abfliessenden Fluids befindet. Damit ist seine Versorgung mit Fluid gesichert. Diesem Lagergehäuse ist eine Leitung 30, die in Figur 4 gezeigt ist, zur Abfuhr des Fluids angeschlossen. Zwischen den Kreiswänden 42 und 43 und der Aussenwand der Behandlungstrommel ist eine zweckmässige, wegfähige, elastische Dichtung vorgesehen.

Als Fluid zum Speisen der hydrostatischen Stützelemente 9 und für das Axiallager 41 ist Öl vorgesehen. Für gewisse Anwendungsgebiete der Behandlungsmaschine kann jedoch auch ein anderes Fluid, z. B. Wasser, angewendet werden. Die beschriebene Behandlungsmaschine, bzw. ihr Gehäuse 1 kann relativ starr zu einem Fundament befestigt sein. Der überwiegende Teil der dynamischen, durch die Unwucht bedingten Auslenkungen der Behandlungstrommel ist dem beschriebenen Lagersystem mit den hydrostatischen Stützelementen angelastet. Nur ein kleiner Restteil von diesen braucht der Abstützung der Maschine am Fundament angelastet zu werden.

Wie es in Figur 4 zweckmässig gezeigt ist, werden Stützelemente 9 mit dem Druckfluid volumetrisch, jedes mit einer im wesentlichen gleichen Strommenge des Druckfluids gespeist. Das Fluid wird von regulierbaren, volumetrischen Elementen, Pumpen bzw. Mengenteiler 28 geliefert. Diese sind einem gemeinsamen, regulierbaren Motor 29 zum Antrieb zugekoppelt oder von einer Hauptpumpe 45 beaufschlagt. Sie liefern das Druckfluid, dosiert über Druckleitungen 15 zu den einzelnen Stützelementen 9. Das aus den Stützelementen wegfliessende Fluid wird über einen Abfuhrweg 30 in einen Behälter 31 zurückgeführt, aus welchem für die volumetrischen Elemente 28 das Fluid über eine Leitung 32 angesaugt wird.

Für einen Ausfall des die volumetrischen Elemente 28 antreibenden Motors 29, bzw. der Hauptpumpe 45 ist eine dem Behandlungstrommelantrieb angekoppelte Hilfspumpe 33 vorgesehen. Sie wird mittels eines Riemens 34 von der Behandlungstrommel 2 angetrieben. Die Pumpe saugt das Fluid aus dem Fluidbehälter 31 durch eine Leitung 35 und liefert das Druckfluid über eine Leitung und ein Zweiweg-Magnetventil 37, falls der Motor 29 der volumetrischen Pumpen 28 läuft, druckentlastet in den Behälter 31. Diese Hilfspumpe 33 ist der Saugleitung 32 der Pumpen 28 zuschaltbar: Beim Betriebsausfall des Motors 29 fällt das Zweiweg-Magnetventil 37 ab und leitet das Druckfluid nun

in eine Verbindungsleitung 38 und somit in die Saugleitung 32 zu den volumetrischen Pumpen 28, die bei dem ausgefallenen, passiv mitdrehenden Motor 29 als volumetrischer Verteiler des Druckfluids für die hydrostatischen Stützelemente 9 wirken. Rückschlagventile 39 und 40 sind zum Verhindern unerwünschter Flussrichtungen des Fluids an den Leitungen 38 und 32 vorgesehen. Ein Ausfall des Motors 29 veranlasst ein Signal zum Abschalten des Motors 3 zum Antrieb der Behandlungstrommel 2.

Der gemäss dem Messen der Belastung des Gehäuses 1 durch die Unwucht regulierbare Antrieb der Behandlungstrommel 2 ist mit bekannten, handelsüblichen Mitteln realisiert: Der Antrieb weist einen Motor auf und ist mit einem Drehmomentwandler 44 zur Aufnahme bzw. Überwindung der beim Antreiben der Behandlungstrommel 2 zum Erreichen ihrer innerhalb des Anwendungsbereiches benötigten Drehgeschwindigkeit vorkommenden Drehmomentspitzen versehen. Dieser Anwendungsbereich liegt zwischen dem Stillstand und der höchsten einzusetzenden Drehgeschwindigkeit der Behandlungstrommel. Der in Figur 4 angedeutete Drehmomentwandler 44 kann z. B. ein Riementriebvorgelege mit variabler Übersetzung sein. Der Antrieb der Behandlungstrommel 2 wird z. B. folgendermassen reguliert: Die Drehzahl der bei kleiner Drehzahl beladenen Trommel wird allmählich erhöht, wobei im diesem Zeitabschnitt eine allmähliche Umschichtung des Schüttgutes zu einer einigermassen regelmässigen Schicht am Umfang der Behandlungstrommel erzielt werden soll; bei weiterem Erhöhen der Drehzahl wird über die Messvorrichtung die dynamische Belastung der Lagerung angezeigt. Ist bei der momentanen Drehzahl die dynamische Belastungsgrenze des Systems erreicht, darf die Drehzahl nicht mehr erhöht werden. Die erreichte Drehzahl wird reduziert zu einer Drehzahl, wo eine erneute, wiederholte Umschichtung des Schüttgutes in der Behandlungstrommel erfolgen kann, bzw. erzielt werden kann. Nach diesem kann die Drehzahl erneut erhöht werden, bis die Messvorrichtung gegebenenfalls eine Überbelastung anzeigt. Es kann also vorkommen, dass der Umschichtungsvorgang mehrmals wiederholt wird. Falls das Umschichten auf die beschriebene Weise nicht gelingt, muss die Situation in der Trommel bei deren Stillstand visuell kontrolliert werden, um die Ursache der Unwucht feststellen und beheben zu können.

Das Regulieren des Antriebs ist mit bekannten Mitteln im Einklang mit bzw. gemäss einem Behandlungsprogramm automatisiert, wobei die Überbelastungsanzeige von dem Weganzeiger 27 in der Regelsystem integriert ist.

Es ist vorstellbar, den beschriebenen mechanischen Weganzeiger 27 mit etwelchen bekannten elektrischen tensometrischen Mitteln zu ersetzen. Vorteilhaft ist auch ein Antrieb mit regulierbarem Gleichstrommotor, mit Thyristortechnik, oder mit Wechselstromumsetzertechnik.

Vorteilhaft ist auch ein Einsatz der Hydrotechnik beim Antrieb der Behandlungstrommel 2, da diese schon bei der Lagerung angewendet ist. Das Fluid vom Behälter 31 wird dann auch für den Antrieb und seine Regelung benutzt. Für den Fall ist, wie in Figur 4 gestrichelt gezeichnet ist, ein hydraulischer, dem Behälter 31 angeschlossener Kreislauf vorgesehen, mit einer Hubvolumen und Drehzahl-regulierbaren Hydropumpe 45 und einem Hubvolumen- und Drehzahl-regulierbaren Hydromotor 46. Die Hydropumpe 45 kann auch die volumetrischen Elemente, jetzt Mengenteiler 28 beaufschlagen.

Bei den zwei letzten Lösungen des Antriebs erübrigte sich das Vorgelege 44.

Für die Fälle, wo besonders grosse Massen zu bewegen sind, wo ein Anfahren mit grossem Energiebedarf verbunden ist, wo hohe Drehmomentspitzen zu überwinden sind, ist für den Antrieb an eine periodisch, d.h. beim Anfahren arbeitende bekannte Reversier-Automatik zu denken, die die Drehmomentspitzen solchen Anfahrens in der Weise überwindet, dass die Masse mehrmals, im Takt der Eigenpendelungsfrequenz der Masse hin und her bewegt wird, bis der gesammelte Schwung genügt, die Drehmomentspitze zu überwinden. Bekannterweise werden z. B. schwere Kirchenglocken auf diese Weise in Schwingung versetzt.

## Patentansprüche

1. Behandlungsmaschine zur Behandlung eines Schüttgutes in einer Behandlungstrommel (2), die in einem Gehäuse (1) mittels mindestens zwei axial voneinander distanzierter Lagerkränze mit hydrostatischen, mit einem Druckfluid anspeisbaren Stützelementen (9) zwischen Laufflächen (10) an der Behandlungstrommel (2) und dem Gehäuse (1) gelagert ist, thermischen, mechanischen und/oder dynamischen Belastungskräften unterschiedlicher und sich ändernder Grössen ausgesetzt ist und mit einem regulierbaren Antrieb (3, 4) drehbar ist, wobei jedes der hydrostatischen Stützelemente (9) radial zur Behandlungstrommel (2) wegfähig zwischen einer Lauffläche (10) an der Behandlungstrommel (2) und dem Gehäuse (1) angeordnet ist, in dem es einen Tragteller (11) mit der Lauffläche zugewandten, mit dem Druckfluid anspeisbaren Drucktaschen (12) aufweist, welcher in einem Stützkörper (13) in der radialen Richtung bis zu einer Endlage verschiebbar eingebettet ist, wobei zwischen dem Tragteller (11) und dem Stützkörper (13) ein mit dem Druckfluid anspeisbarer, abgedichteter Druckraum (14) vorgesehen ist, wobei weiter eine Vorrichtung (27) zum Messen der dynamischen Belastung des Gehäuses (1) durch eine Unwucht der Behandlungstrommel (2) vorgesehen ist, von welcher ein Signal zum Regulieren des Antriebs der Behandlungstrommel (2) abgeleitet ist,. dadurch gekennzeichnet, dass jeder der Lagerkränze mindestens drei regelmässig am Umfang im Kreis angeordnete Stützelemente (9) aufweist, dass jedes hydrostatische Stützelement (9) im Lagerkranz mit einer im wesentlichen gleichen Strommenge des Druckfluids volumetrisch anspeisbar ist, dass eine regulierbare Vorrichtung (29, 28, 33) zum Gewährleisten der volumetrischen Anspeisung der hydrostatischen Stützelemente (9) der Behandlungsmaschine angeschlossen ist, daß zwischen dem Stützkörper (14) und dem Gehäuse (1) ein einstellbar elastisches Zwischenglied (20) angeordnet ist, wobei mit der Unwuchtmeßvorrichtung (27) der Druck gemessen wird, mit dem ein Stützkörper (13) auf das Zwischenglied (20) bzw. auf das Gehäuse (1) in radialer Richtung einwirkt, dadurch dass ein Weganzeiger (27) am Stützkörper (13) vorgesehen ist, der den Abstand zwischen dem Stützkörper (13) und dem Gehäuse (1) angibt.

2. Behandlungsmaschine nach Anspruch 1, dadurch gekennzeichnet, dass der Druckraum (14) zwischen einer konkaven Fläche (17) im Stützkörper (13) und einer, zu jener konkaven komplementär ausgebildeten konvexen Fläche (18) an dem Tragteller (11) gebildet ist und mittels Drosselbohrungen (16) durch den Tragteller (11) mit dessen Drucktaschen (12) verbunden ist, wobei die Flächen (17 und 18) Halbkugel-Flächen sind, und dass der Druckraum (14) mit dem Druckfluid über eine Leitung (15) anspeisbar ist.

3. Behandlungsmaschine nach Anspruch 2, dadurch gekennzeichnet, dass die Leitung (15) in ein netzartiges Kanalsystem (19) mündet, welches an einer der Flächen (17, 18) vorgesehen ist.

4. Behandlungsmaschine nach Anspruch 1, dadurch gekennzeichnet, dass das Zwischenglied eine Feder (20) ist.

5. Behandlungsmaschine nach Anspruch 1, dadurch gekennzeichnet , dass das Zwischenglied eine Tellerfeder (20) bzw. ein Tellerfederpaket mit einer dämpfenden Federcharakteristik ist.

6. Behandlungsmaschine nach Anspruch 4, dadurch gekennzeichnet, dass zwischen dem Stützkörper (13) und dem Gehäuse (1), parallel zu dem Zwischenglied (20) eine hydraulische Dämpfungsvorrichtung zum Dämpfen der Bewegungen des Stützkörpers (13) relativ zum Gehäuse (1) vorgesehen ist.

7. Behandlungsmaschine nach Anspruch 1, dadurch gekennzeichnet, dass zum volumetrischen Anspeisen der hydrostatischen Stützelemente (9) regulierbare volumetrische Elemente, Pumpen bzw. Mengenteiler (28) für das Druckfluid eingesetzt sind, welche jeweils von einem gemeinsamen Motor (29) angetrieben bzw. von einer Hauptpumpe (45) beaufschlagt sind, wobei für einen Ausfall des Motors (29) bzw. der Hauptpumpe (45) eine dem Behandlungstrommelantrieb zugekoppelte Hilfspumpe (33) für das Druckfluid vorgesehen ist, deren Druckseite der Saugseite der volumetrischen Elemente (28) zuschaltbar ist.

8. Behandlungsmaschine nach Anspruch 1, dadurch gekennzeichnet, dass der Antrieb der Behandlungstrommel (2) mit einem regulierbaren, das Drehmoment verstärkenden Vorgelege versehen ist zur Aufnahme bzw. Überwindung vorkommender Drehmomentspitzen.

9. Behandlungsmaschine nach Anspruch 1, dadurch gekennzeichnet, dass zum Antrieb der Behandlungstrommel (2) ein Hubvolumen- und Drehzahl-regulierbarer Hydromotor (46) vorgesehen ist, der über eine Hubvolumen- und Drehzahl-regulierbare Hydropumpe (45) mit einem Druckfluid versorgt wird.

10. Behandlungsmaschine nach Anspruch 1, dadurch gekennzeichnet, dass zum Überwinden hoher Drehmomentspitzen der Antrieb der Behandlungstrommel (2) mit einer periodisch einschaltbaren Reversier-Automatik versehen ist.

11. Behandlungsmaschine nach Anspruch 1, dadurch gekennzeichnet, dass die Behandlungstrommel (2) im Gehäuse (1) mittels eines hydrodynamischen Axiallagers (41) axial gelagert ist, welches in einem Ablaufraum des Druckfluids von den hydrostatischen Stützelementen (9) angeordnet ist, womit das Axiallager (41) mit dem Fluid zur Wahrung seiner hydrodynamischen Arbeitsweise versorgt wird.

## Claims

1. Treatment machine for the treatment of a loose material in a treatment drum (2), which is mounted in a housing (1) by means of at least two bearing rings, distanced axially from each other, with hydrostatic support elements (9) which are able to be supplied with a pressure fluid, between contact surfaces (10) on the treatment drum (2) and the housing (1), is exposed to thermal, mechanical and/or dynamic load forces of differing and changing extents and is rotable by a controllable drive (3, 4), in which each of the hydrostatic support elements (9) is arranged so as to be movable radially to the treatment drum (2) between a contact surface (10) on the treatment drum (2) and the housing (1), in which it has a carrier plate (11) with pressure pockets (12) facing the contact surface and which are able to be supplied with the pressure fluid, which plate is embedded in a support body (13) so as to be displaceable in radial direction up to an end position, in which between the carrier plate (11) and the support body (13) a pressure chamber (14) is provided which is sealed and is able to be supplied with the pressure fluid, in which a device (27) is also provided to measure the dynamic load of the housing (1) through an imbalance of the treatment drum (2), from which a signal is derived to regulate the drive of the treatment drum (2), characterized in that each of the bearing rings has at least three support elements (9) arranged in a circle regularly on the

circumference, that each hydrostatic support element (9) in the bearing ring is able to be supplied volumetrically with a substantially identical quantity of flow of the pressure fluid, that a controllable device (29, 28, 33) is connected to the treatment machine to ensure the volumetric supply of the hydrostatic support elements (9), that between the support body (14) and the housing (1) an adjustably elastic intermediate member (20) is arranged, in which the pressure by which a support body (13) acts on the intermediate member (20) or respectively on the housing (1) in radial direction is measured by the imbalance measuring device (27), in that a path indicator (27) is provided on the support body (13) which indicates the distance between the support body (13) and the housing (1).

2. Treatment machine according to Claim 1, characterized in that the pressure chamber (14) is formed between a concave surface (17) in the support body (13) and a convex surface (18) on the carrier plate (11), which is constructed so as to be complementary to the concave one, and is connected by means of throttle bores (16) through the carrier plate (11) with its pressure pockets (12), whereby the surfaces (17 and 18) are hemispherical surfaces, and that the pressure chamber (14) is able to be supplied with the pressure fluid via a duct (15).

3. Treatment machine according to Claim 2, characterized in that the duct (15) opens into a network-like channel system (19), which is provided on one of the surfaces (17, 18).

4. Treatment machine according to Claim 1, characterized in that the intermediate member is a spring (20).

5. Treatment machine according to Claim 1, characterized in that the intermediate member is a plate spring (20) or respectively a plate spring set with a damping spring characteristic.

6. Treatment machine according to Claim 4, characterized in that between the support body (13) and the housing (1), parallel to the intermediate member (20) a hydraulic damping device is provided, to damp the movements of the support body (13) relative to the housing (1).

7. Treatment machine according to Claim 1, characterized in that for the volumetric supply of the hydrostatic support elements (9), controllable volumetric elements, pumps or respectively quantity distributors (28) for the pressure fluid are used, which in each case are driven by a common motor (29) or respectively are acted upon by a main pump (45), in which for a failure of the motor (29) or respectively of the main pump (45) an auxiliary pump (33) is provided for the pressure fluid, which is coupled to the treatment drum drive, and the pressure side of which is able to be connected to the suction side of the volumetric elements (28).

8. Treatment machine according to Claim 1, characterized in that the drive of the treatment drum (2) is provided with a controllable back-gearing arrangement which intensifies the torque, to receive or respectively overcome torque peaks which occur.

9. Treatment machine according to Claim 1, characterized in that to drive the treatment drum (2) a hydromotor (46) is provided which is able to be regulated as regards stroke volume and rotational speed, and which is supplied with a pressure fluid via a hydro-pump (45) which is able to be regulated as regards stroke volume and rotational speed.

10. Treatment machine according to Claim 1, characterized in that to overcome high torque peaks, the drive of the treatment drum (2) is provided with an automatic reversing means, which is able to be engaged periodically.

11. Treatment machine according to Claim 1, characterized in that the treatment drum (2) is axially mounted in the housing (1) by means of a hydrodynamic axial bearing (41), which is arranged in an outlet area of the pressure fluid from the hydrostatic support elements (9), whereby the axial bearing (41) is supplied with the fluid to maintain its hydrodynamic mode of operation.

**Revendications**

1. Machine de traitement pour le traitement d'un produit en vrac dans un tambour de traitement (2), qui est montée dans un bâti (1) au moyen d'au moins deux couronnes de paliers, placées à une certaine distance axiale l'une de l'autre et comportant des éléments hydrostatiques d'appui (9), qui peuvent être alimentés avec un fluide sous pression et se trouvent entre des surfaces de roulement (10) disposées sur le tambour de traitement (2) et le bâti (1), ce tambour étant soumis à des forces thermiques, mécaniques et/ou dynamiques de charges de valeurs différentes et changeantes et pouvant tourner avec un entraînement (3, 4), qui peut être régulé, cependant que chacun des éléments hydrostatiques (9) d'appui est mobile radialement par rapport au tambour de traitement (2), entre une surface de roulement (10) du tambour (2) et le bâti (1), dans lequel il présente un disque porteur (11), comportant des poches de compression (12) tournées vers la surface de roulement et alimentables avec le fluide sous pression, ce disque porteur étant inséré dans un corps d'appui (13) et mobile radialement jusqu'à une position d'extrémité, cependant qu'entre le disque porteur (11) et le corps d'appui (13), il est prévu un espace de compression (14) rendu étanche et alimentable avec le fluide sous pression, cependant qu'il est prévu par ailleurs un dispositif (27) pour la mesure de la charge dynamique du bâti (1) causée par un balourd du tambour de traitement (2), ce dispositif délivrant un signal pour réguler l'entraînement du tambour de traitement (2), caractérisée en ce que chacune des trois couronnes de paliers présente au moins trois éléments d'appui (9), disposés régulièrement en cercle sur la périphérie; que chaque élément hydrostatique d'appui (9) se trouvant dans la couronne de palier peut être alimenté en une quantité de fluide sous pression essentiellement égale; qu'un dispositif (29, 28, 33), pouvant être régulé et destiné à assurer l'alimentation volumétrique des éléments hydrostatiques d'appui (9), est raccordé à la machine de traitement, cependant qu'entre le corps d'appui (14) et le bâti (1) se trouve un organe intermédiaire (20) élastique et réglable; qu'avec le dispositif mesureur de balourd (27) on mesure la pression avec laquelle un corps d'appui (13) agit radialement sur l'organe intermédiaire (20) ou sur le bâti (1), du fait que sur le corps d'appui (13) est prévu un indicateur de course (27), qui indique la distance entre le corps d'appui (13) et le bâti (1).

2. Machine de traitement suivant la revendication 1, caractérisée en ce que l'espace de compression (14) est formé entre une surface concave (17) du corps d'appui (13) et une surface convexe (18), complémentaire de la surface concave et disposée sur le disque porteur (11) et qu'il communique, au moyen de canaux d'étranglement (16) traversant le disque porteur (11), avec ses poches de compression (12), cependant que les surfaces (17 et 18) sont hémisphériques et que l'espace de compression (14) peut être alimenté en fluide sous pression par une conduite (15).

3. Machine de traitement suivant la revendication 2, caractérisée en ce que la conduite (15) débouche dans un système de canaux (19), prévu sur une des surfaces (17, 18).

4. Machine de traitement suivant la revendication 1, caractérisée en ce que l'organe intermédiaire est un ressort (20).

5. Machine de traitement suivant la revendication 1, caractérisée en ce que l'organe intermédiaire est une rondelle Belleville (20) ou un empilement de rondelles Belleville, comportant une caractéristique élastique d'amortissement.

6. Machine de traitement suivant la revendication 4, caractérisée en ce qu'entre le corps d'appui (13) et le bâti (1), on prévoit, parallèlement à l'organe intermédiaire (20), un dispositif d'amortissement hydraulique, pour l'amortissement des mouvements du corps d'appui (13) par rapport au bâti (1).

7. Machine de traitement suivant la revendication 1, caractérisée en ce que, pour alimenter volumétriquement les éléments hydrostatiques d'appui (9), on met en oeuvre des éléments, pompes ou répartiteurs (28) de débit pour le fluide sous pression, qui sont volumétriques, peuvent être régulés et sont entraînés chaque fois par un moteur commun (29) ou alimentés par une pompe principale (45), cependant que, dans le cas d'une défaillance du moteur (29) ou de la pompe principale (45), il est prévu une pompe auxiliaire (33) pouvant être couplée à l'entraînement du tambour de traitement et destinée au fluide sous pression, le côté de refoulement de cette pompe pouvant être raccordé au côté d'aspiration des éléments volumétriques (28).

8. Machine de traitement survant la revendication 1, caractérisée en ce que l'entraînement du tambour de traitement (2) est muni d'une transmission, qui peut être régulée, amplifie le couple de rotation et sert à absorber ou surmonter les pointes du couple de rotation qui se produisent.

9. Machine de traitement suivant la revendication 1, caractérisée en ce que, pour l'entraînement du tambour de traitement (2), on prévoit un moteur hydraulique (46), dont le volume utile de course et la vitesse de rotation peuvent être régulés, ce moteur étant alimenté en fluide sous pression par une pompe hydraulique (45), dont le volume utile de course et la vitesse de rotation peuvent être régulés.

10. Machine de traitement suivant la revendication 1, caractérisée en ce que, pour surmonter des pointes élevées du couple de rotation, l'entraînement du tambour de traitement (2) est muni d'un automatisme à inversion qui peut être mis périodiquement en circuit.

11. Machine de traitement suivant la revendication 1, caractérisée en ce que le tambour de traitement (2) est logé axialement dans le bâti (1) au moyen d'une butée ou palier axial hydrodynamique (41), qui est placé dans un espace d'écoulement - du fluide sous pression - des éléments hydrostatiques d'appui (9), avec l'aide duquel le palier axial (41) est alimenté en fluide, afin que son fonctionnement hydrodynamique soit assuré.

0 158 051

FIG.1

FIG.2

FIG.3

FIG.4